# EUROPEAN PATENT APPLICATION

(11) **EP 4 481 760 A1**
(43) Date of publication of application: **25.12.2024**
(21) Application number: 23739809.4
(22) Date of filing: 12.01.2023
(51) Int. Cl.: G21C 1/04, G21C 1/16, G21D 5/02, G21C 15/257, G21H 1/00

(54) **MODULAR NUCLEAR BATTERY SYSTEM AND NUCLEAR CELL**

(30) Priority: 14.01.2022 BR 102022000784
(71) Applicant: Terminus Pesquisa e Desenvolvimento em Energia Ltda, Ipanema, RJ 22410905 Rio de Janeiro (BR)
(72) Inventor: MANOEL LOSADA MOREIRA, João, 05628-000 São Paulo (BR); DE AGUIAR BRAID, Adolfo, 05628-000 São Paulo (BR)
(74) Representative: Ballester Cañizares, Rosalia
(86) International application number: PCT/BR2023/050008
(87) International publication number: WO 2023/133618

(57) **Abstract**

The present invention is related to a Nuclear Battery comprising a plurality of Nuclear Cells housing a nuclear microreactor. The plurality of Nuclear Cells, or modules, combined can generate from 80 kW to 4.8 MW of thermal power and/or from 32 kW to 1.92 MW of electrical power, wherein the power generated is directly proportional to the number of modules or Nuclear Cells assembled in the Nuclear Battery and may vary according to demand. The Nuclear Battery is encapsulated in sealed containments to prevent the release of radioactive materials to operators, the environment and to protect the Nuclear Battery from external threats and damage. Examples of implementations of nuclear batteries or sets of them with electrical power generation capacity between 32 kW and 10 MW are presented, included in the category of small modular reactors and generation IV reactors.

The heat generated in the core by fission chain reactions is transferred by conduction to the heat removal module of the reactor, and this transports the heat to the power generation module.

## Description

### APPLICATION FIELD

The present invention generally refers to a Nuclear Battery based on a plurality of nuclear microreactors, encapsulated in Nuclear Cells, forming a simple modular nuclear system for generating electrical power between 32 kW and 1.92 MW and thermal power (heat) between 80 kW and 4.8 MW. The two main parts of the present invention, Nuclear Battery and Nuclear Cell, can be manufactured in factory production lines, aiming to generate electrical energy and/or thermal energy at competitive costs, in addition to presenting reduced weight and volume.

### BACKGROUND OF THE INVENTION

The high cost of implementation, combined with the complexity of construction and the nuclear licensing process are important factors that inhibit the growth of nuclear participation in the electricity market, despite its important advantages in terms of environmental sustainability. Advanced designs for new large nuclear plants, even incorporating modular assembly, design simplification and reduction of construction stages at the implementation site, were unable to reduce risks for investors, suffered significant delays during construction, and presented significant cost increases.

In an attempt to overcome these problems, several proposals for smaller nuclear plants have emerged with modular solutions and system reduction and simplification. The proposals for Small Modular Reactors (SMR) seek to offset gains in economies of scale from large plants by adopting simplified systems possible only in small plants, emphasizing greater serial production in factories of systems, components, and structures, and significantly reducing work on the construction site.

Sustainability issues and the high competitiveness gain of renewable energy sources, mainly photovoltaic generation on the roofs of houses and commercial and industrial buildings, have provoked great interest in the micropower generation market and the use of microgrids previously dominated by diesel microgeneration. This new market opens up an opportunity for nuclear, which can generate power continuously or operate as a load follower, operating in isolated, rural, or urban areas and microgrids. Nuclear microgeneration can provide ancillary services to electrical grids and microgrids, complement generation, stabilize them, and contribute to the higher quality of the energy generated, such as, for example, compensating for the variability of generation from renewable sources such as photovoltaics and biomass with a load following operation and ensure energy quality in microgrids. During moments of low electricity demand, the Nuclear Battery can produce heat or other products, such as Hydrogen - H₂.

The present invention targets this promising small and micro electricity generation market and is classified as microreactors or Nuclear Batteries. The power generation capacity is very small (between 32 kW and 1.92 electrical MW) when compared to SMRs (Small Modular Reactors - Pequenos Reatores Modulares), medium and large power reactors (ranging from 20 MW to 1600 electrical MW). This family of reactors allows complete manufacturing in mechanized factories, series production, and very little on-site construction. The invention reveals the Nuclear Battery and the Nuclear Cell, which contains a microreactor and its components. The Nuclear Battery comprises a plurality of modules, called Nuclear Cell, for generating thermal power, preferably in the range of 80 kW to 4.8 MW, however, these values can be lower or higher.

This invention proposes innovations that allow the installation of Nuclear Batteries in remote locations and/or integration into electricity microgeneration grids. The Nuclear Battery is indicated for supplying military bases, mines where electricity transmission lines do not reach nearby, factories, hospitals and commercial and/or service facilities with high demand for electricity, remote villages and hamlets where transmission lines do not reach, oil platforms, electric vehicle battery charging stations, medium or large ships and other applications that require the uninterrupted supply of electrical energy with high reliability. This invention also targets the market for small and micro electricity generation via microgrids in rural areas, urban areas and isolated areas.

The Nuclear Battery can also provide thermal power or heat for industrial purposes, mines, hospitals, and commercial or service facilities that demand heat.

In Nuclear Cells, redundant systems and the plurality of protective layers of shields and containments increase nuclear safety. These systems allow the installation of Nuclear Batteries in urban and rural areas without risk to operators, the public, and the environment.

To address public concerns regarding nuclear energy, this invention aligns with issues of safety, sustainability, and adequate integration with renewable sources. Regarding public acceptance of nuclear energy, the invention presents a very low risk of accidents, very little radioactive waste generation, and possible recycling of nuclear fuel through the use of long-lived radioactive transuranics generated by large nuclear reactors during electricity generation. To avoid the risk of proliferation of nuclear materials, terrorism, and attempted theft of the Nuclear Battery, each Nuclear Cell preferably uses uranium with an enrichment of less than 20% (High-Assay Low-Enriched Uranium - HALEU) and has alarms and GPS (*Global Positioning System,* or Sistema de Posicionamento Global) to allow real-time traceability and security countermeasures.

Regarding economic criteria, this invention is compact, has fewer and simpler systems compared to large, medium and small nuclear power reactors. The present invention was conceived with the objective of being fully manufactured in small to medium-sized factories, with modularity, series manufacturing, rapid assembly at the site of operation, and safe transportation to consumer centers in trucks, train cars, ships, or cargo transport planes. The expected cost of electricity is aimed at competitiveness in the microgeneration market from 50 kW to 10 MW.

### STATE OF THE ART

Brazilian document PI 0416642-6 describes a Voltaic Nuclear Battery comprising a plurality of voltaic Nuclear Cells to generate electrical energy directly from nuclear energy, using a liquid semiconductor as means to efficiently convert nuclear energy, whether nuclear fission and/or radiation energy, directly into electrical energy.

The reactor disclosed in the document comprises a plurality of voltaic Nuclear Cells grouped and enclosed by a radiation shield and an external casing to prevent the escape of any radiation. Coolant is pumped around the interior of the reactor to prevent overheating, the coolant being a liquid semiconductor, which is responsible for producing electrical energy.

The document above differs from the present invention since the generation of electrical energy occurs directly from nuclear energy, while in the present invention, the conversion of thermal power into electrical power occurs from thermodynamic cycles such as Brayton, Rankine, Stirling, or other conversion technology to generate useful work.

US document US 2016/0012924 describes a reactor developed to produce electricity for spacecraft from a small, enriched uranium reactor rather than using radioisotope power systems (e.g., Plutonium-238).

The reactor power system comprises a reactor core, a reflector, a neutron absorber bar for controlling the reactor drive, a plurality of *heat pipes* to transfer thermal energy, a radiation shield to protect the other components of the system, and a plurality of Stirling engines to provide electricity in space missions. This document focuses on using Stirling engines to increase the thermal efficiency of systems in space applications.

However, as it is a reactor for space applications, the shielding does not enclose the reactor, and there is no concern about the emission of radiation or escape of radioactive products into the space environment, unlike the present invention, which has an in-depth defense in each of the Nuclear Cells, protecting operators and individuals of the public. Furthermore, the document above refers to a single reactor, while the invention now disclosed presents a Battery that comprises a plurality of Nuclear Cells, which allows different arrangements according to the desired power, in addition to allowing the continuity of the operation of the Nuclear Battery and power generation even in the event of a failure in one or more Nuclear Cells.

Document US 2018/033501 presents a small nuclear reactor with different fuels from fissile and non-fissile material, which includes *heat pipes* to transmit the heat generated in the reactor core by the fission of nuclear fuel to an electricity generator, which comprises thermoelectric conversion elements. The small nuclear reactor comprises a radiation shield and a plurality of radiators to dissipate the remaining heat from the electricity generator.

Like the previous document, its shielding is designed only to protect the other reactor components. The document also refers to a single reactor, not presenting the modularity characteristic of the present invention. Additionally, the reactor core is strongly heterogeneous, while the core is almost homogeneous in the present invention.

The article "*A Small Fission Power System With Stirling Power Conversion for NASA Science Missions"* describes a design of a few kW class fission power system developed by NASA to replace thermoelectric power converters with free-piston Stirling engines.

The fission reactor includes a solid block UMo core and built-in sodium *heat pipes* at 1100 K. With Stirling power conversion, the system can produce 3 electrical kW with a specific power of 4 W/kg. The Stirling system includes two power conversion modules, each with four 400 W converters. The four converters share a common heat collector block that interfaces with the sodium *heat pipes* from the reactor. Waste heat from the converter is removed by an aluminum reject plate with water heating tubes coupled to the aluminum radiator fins. The system is scalable to 5 electrical kW and 5 W/kg using the same reactor. With relatively small dimensional changes in the reactor, the technology is applicable to systems up to 10 electrical kW and 5.9 W/kg.

Like the other documents, this one does not reveal a Nuclear Battery with a plurality of Nuclear Cells, nor does it reveal shielding and containment integrated into the Nuclear Cell with the plurality of protective layers producing greater defense in depth.

Therefore, it can be concluded that the present invention differs from the state-of-the-art documents presented here since none of them refers to a Nuclear Battery system formed by a plurality of Nuclear Cells, with its generation power defined by the number of Nuclear Cells, with shielding and containment integrated into each Nuclear Cell with a plurality of protective layers producing greater defense in depth; in addition to comprising penetrations in the Nuclear Cell configured to accommodate heat removal tubes from two heat transfer technologies: heat pipes, preferred for smaller Nuclear Batteries (a few hundred kW) or tubes with forced gas/liquid circulation, preferred for larger Nuclear Batteries (1 or 2 MW). Additionally, the Nuclear Cell comprises a core in the form of a slab (parallelepiped), with a greater ratio between the external surface and volume intended to facilitate the transfer of heat by conduction through the reactor core, with greater ease of manufacturing; compact core formed by the juxtaposition of solid fuel elements with lining that adds a further protective layer between the source of radioactive material and operators and individuals of the public.

### SUMMARY OF THE INVENTION

The present invention is described in two main parts: the Nuclear Battery and the Nuclear Cell. The first is a modular system with a plurality of Nuclear Cells (modules) combined to generate, preferably, electrical power ranging from 32 kW to 1.92 MW and/or thermal power (heat) ranging from 80 kW to 4.8 MW. The power generated is directly proportional to the number of modules or Nuclear Cells assembled in the Nuclear Battery and may vary according to demand. Both are based on concepts proposed for small modular reactors and generation IV reactors.

The Nuclear Battery is divided into two different blocks, called Block A and Block B, each with its own specific containment. Block A houses the various Nuclear Cell modules, the various heat transfer modules, support structures, and other devices required to ensure the correct and safe functioning of the Nuclear Battery. Block B houses the power generation module, which includes modules for converting thermal energy into useful work and generating electricity, and the Nuclear Battery control and supervision modules. Block A has sealed containment to protect operators, the public, and the environment from the release of radiation and radioactive material, while Block B has simple containment.

In Block A support structures are used to ensure the correct positioning and fixing of the various Nuclear Cells in the Nuclear Battery, heat transfer modules, instrumentation, control, and other components and structures. Block B must ensure the correct positioning, fixing, and support of modules for converting thermal energy into useful work and electricity generation, heat utilization, and other components. The power generation module can use different technologies such as Brayton, Rankine, Stirling cycles or other conversion technology to generate useful work.

The Nuclear Cell comprises a nuclear microreactor and its components. The objective of the Nuclear Cell is to generate thermal power from nuclear fission chain reactions with levels preferably ranging between 40 kW and 120 kW, depending on the size of the core, but these values can be lower or higher. Each Nuclear Cell constitutes a thermal power generating module with multiple sealed containments and radiation shields, so that each one is independent and does not cause interference with the others.

The Nuclear Battery, in addition to its enormous operational flexibility, allows maintenance and/or replacement to be performed on one or more Nuclear Cells without interrupting energy generation, as it is possible to be performed while the other Nuclear Cells are in operation.

Additionally, the plurality of Nuclear Cells increases the availability of power generation from the Nuclear Battery, as the failure of one of them and its consequent shutdown does not prevent the others from continuing to generate power.

The core can be a solid monolithic block, as if it were a single fuel element, or a set of fuel elements juxtaposed to form a compact block. The fission heat generated is transferred by conduction to heat removal modules embedded in the reflector near the core or at the core-reflector interface.

The modular Nuclear Battery can be built and assembled entirely in a factory. The simplicity and reduced number of Nuclear Battery and Nuclear Cell systems facilitate the manufacturing process and allows series manufacturing. The Nuclear Battery can be transported directly to the operating site almost ready to operate and allows easy local or remote operation and supervision. These features provide high reliability and availability due to their high modularity, simplicity and high security.

### BRIEF DESCRIPTION OF THE DRAWINGS

The invention can be better understood through the brief description of the following figures:
Figure 1 presents a perspective view of one of several possible configurations of the Nuclear Battery with different numbers of modules or Nuclear Cells;
Figures 2 and 3 show the perspective view and section A-A (top view) of the Nuclear Cell, respectively;
Figure 4 illustrates the embodiment of the microreactor core as a monolithic block;
Figure 5 illustrates the embodiment of the microreactor core composed of a set of fuel elements juxtaposed to form a compact block;
Figure 6 shows the minimum implementation of a Nuclear Battery with just 1 Nuclear Cell, with a vertical section (C-C) ;
Figure 7 shows the implementation of a Nuclear Battery with 20 Nuclear Cells with 2 blocks B (on the right and on the left);
Figure 8 illustrates the arrangement of Nuclear Cells with two rows of units in vertical section.

### DETAILED DESCRIPTION OF THE INVENTION

The invention can be better understood through the following detailed description, in accordance with the accompanying figures.

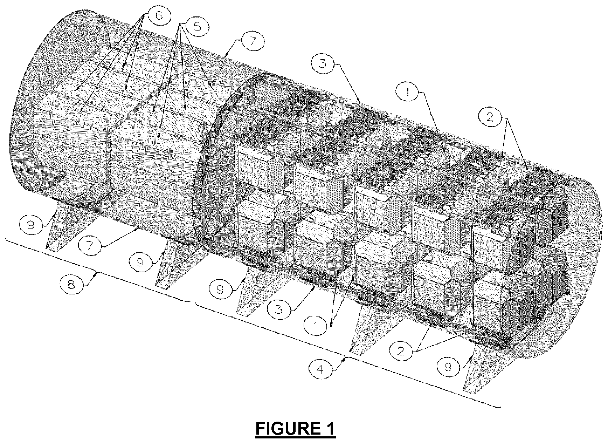

The present invention describes a modular Nuclear Battery system comprising two blocks: Block A (4) and Block B (8), and support structures (9), as illustrated in figure 1. Block A (4) houses at least one Nuclear Cell (1) or several Nuclear Cell modules (1), several heat transfer modules (2), Nuclear Cell attachment modules (1), and nuclear instrumentation (neutrons and gamma radiation sensors) and other sensors (temperature, humidity, pressure, fire, and GPS geographic positioning) required for control and monitoring of Nuclear Cells (1) and Nuclear Battery. Block B (8) houses the power generation module, which includes modules for converting thermal energy into useful work (5) and the electricity generation module (6), and structures required to control and monitor the Nuclear Battery (control panel with display and alarms for high temperature, high radiation, neutron flux, reactivity, position of reactivity drums, position of control bars, fire, external energy demand information and GPS). Block A (4) comprises a structural and sealed steel containment (3) sized to resist impacts and to protect operators, the public and the environment from the release of radiation and radioactive and nuclear material, while Block B (8) has simple containment (7) of thin steel for non-radioactive area.

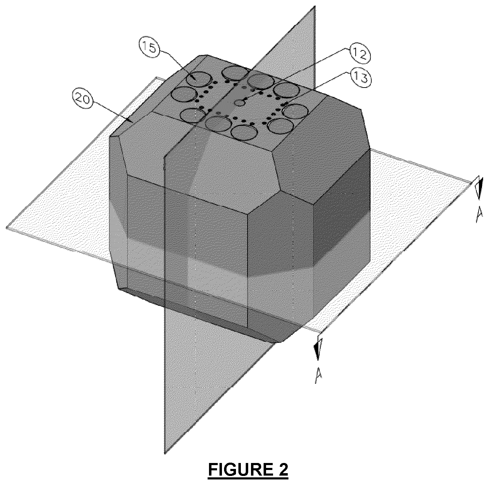

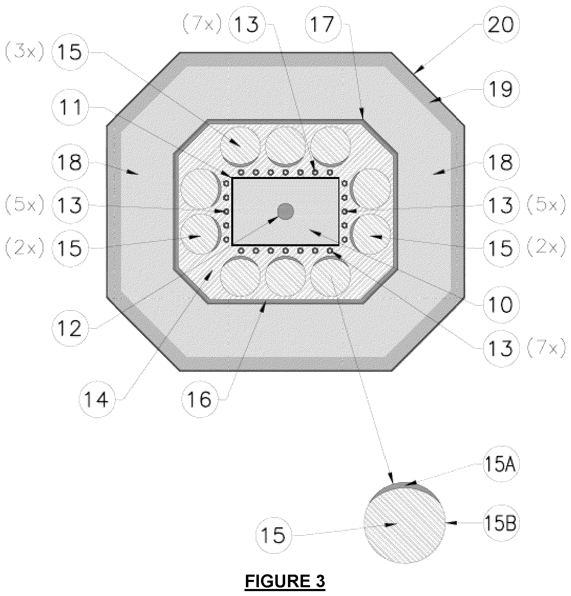

The Nuclear Cell (1), illustrated in figures 2 and 3, comprises a nuclear microreactor (10) and its components. Each Nuclear Cell (1) has its own layered shielding and containment arrangement so that they are independent and do not affect each other. Reactors can be designed and built in any geometry, such as: cylindrical, almost cylindrical, cubic, spherical, or in the shape of a parallelepiped (slab).

Figure 2 shows a perspective view of the Nuclear Cell (1) with sealed penetrations. Sealed penetration for the reactivity control bar (12) in the center of the microreactor core (10), sealed penetrations for the piping (13) of the heat transfer module (2) of the microreactor core (10).

Depending on the arrangement in the Nuclear Battery and the power of the Nuclear Cells (1), these penetrations can be partial or total (penetrations that cross the entire Nuclear Cell). For a Nuclear Battery with electrical power up to 1.5 MW, the preferred technology for the heat transfer module (2) of the microreactor core (10) is *heat pipes,* and in this case, the penetrations are partial. For a Nuclear Battery with electrical power above 1.5 MW, the preferred technology for the heat transfer module (2) of the core is the forced circulation of refrigerant in the form of gas or liquid, and in this case, the penetrations are total.

Figure 3 (section A-A) presents the internal details of the Nuclear Cell (1), showing the penetrations and main components from the center to the periphery. The microreactor (10) comprises the core (nuclear fuel region), neutron reflector (14), and reactivity control assembly, which consists of two parts: rotating drums (15) and neutron absorber bar (12). The neutron reflector (14) is preferably constructed of beryllium oxide, metallic beryllium, alumina, or graphite. The neutron absorber bar (12) consists of B₄C. The rotating drums (15) contain neutron absorber plates (15A) of B₄C and reflective material (15B) of beryllium oxide, beryllium metal, alumina, or graphite. The detail in Figure 3 identifies the two regions of the rotating drum with different materials.

The containment and shielding arrangement integrated with a plurality of layers of the Nuclear Cell (1), meeting the principle of defense in depth, contains at least 3 metallic barriers between the reactor core and the environment. The first containment barrier (11) comprises a sealed metallic lining of stainless steel or Zr alloys. Enclosing the external part of the neutron reflector (14), the neutron shield is located in the form of a neutron absorption plate (16), preferably of B₄C. The second containment barrier (17) comprises a sealed metallic lining of stainless steel, which encloses the entire neutron reflector and shielding region and also all penetrations in the neutron reflector (14) for the neutron absorber bar (12), rotating drums (15), and piping (13) of the heat transfer modules (2). Next is the gamma radiation shielding (18) made of stainless steel, tungsten, lead, concrete, or a combination of plates of these materials, the thermal insulation (19), which can be ceramic material such as Al₂O₃. The third containment barrier (20) comprises a sealed stainless steel metal lining and, similarly to the second containment barrier (17), all penetrations in the region of the radiation shield are also sealed. This arrangement of containment and shielding, according to the project's requirements to ensure the safety of workers, the public, and the environment, can include more metal barriers and protective layers with different characteristics without meaning a new invention.

In the case of partial penetrations, these can be made through the upper or lower faces of the Nuclear Cell (1), or also through both faces, thus allowing the search for a better piping arrangement inside the Nuclear Battery.

The sealed penetrations of the neutron absorber bar (12), rotating drums (15), and piping (13) of the heat transfer modules (2) pass through sealed shields and containments until reaching the outer surface (20) of the Nuclear Cell (1). The locations of the penetrations for the neutron flux detectors are not detailed in the figure.

The fission heat generated in the Nuclear Cell (1) in Block A (4) is transferred by conduction through the core of the microreactor (10) for a plurality of tubes (13) of the heat transfer modules (2). The piping (13) of the reactor heat removal module is positioned in sealed penetration at the core-reflector interface. These heat transfer modules (2) pass through the reflector (14) and all components of the Nuclear Cell containment (1) and connect directly to the power generation module located in Block B (8).

The details of the heat transfer and power generation modules depend on the technology adopted. The heat transfer module (2) is based on forced circulation technologies, with liquid refrigerants (liquid metal such as Na, K, Li, or mixtures thereof) or gas (He, CO₂ or air), or passive technologies such as *heat pipes* (tubes de calor) with liquid metal working fluid (Na, K, Li, or mixture thereof). The power generation module contains modules that can be based on Rankine, Brayton, Stirling or other thermal cycles to generate useful work.

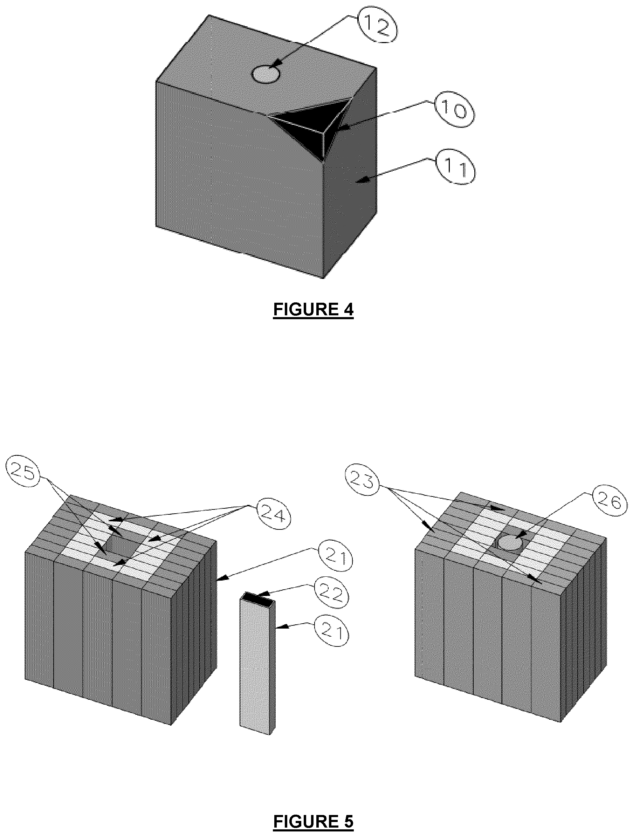

Figures 4 and 5 show the two alternatives for manufacturing the fuel elements and core, which are based on fuels from Materials Test Reactors (MTR) and Research Reactors with fuel in the form of thicker laminated plates. In both cases, the generated fission heat is transferred by conduction to the heat transfer module (2) embedded in the reflector (14) close to the core or at the core-reflector interface.

Figure 4 shows an embodiment of the microreactor core (10), which comprises a solid monolithic block containing fuel material in its interior (uranium metal or different uranium alloys, such as UMo, or UZr or ceramics, such as uranium oxide (UO₂), or uranium carbide (UC), with the first containment barrier (11) having a sealed metallic lining of stainless steel or zirconium alloy. In the center, there is a sealed penetration for positioning a neutron absorber bar (12).

Figure 5 shows the core of the microreactor (10) composed of a set of fuel elements of different enrichments (23), (24) and (25) juxtaposed to form a compact block. The detail in Figure 5 shows a fuel element with the core containing a nuclear fuel element (22) and its metallic lining (21), it also shows that two fuel elements, in the center, are replaced by a device for positioning a reactor control and/or safety bar (26) (for neutron absorption with B₄C). Fuel plates can be made of metallic uranium, different uranium alloys, uranium oxide or carbide, dispersions, mixtures of uranium and transuranics, mixtures of Th, ²³⁵U and transuranics or other different forms of chemical compounds or metal alloys.

The fuel elements (22) are lined with a metallic lining (21) of stainless steel or a Zr alloy. Due to the fast neutron spectrum of the microreactor core (10), fission reactions occur with ²³⁵U and fast neutron fissionable isotopes, such as ²³⁸U or a mixture of Th isotopes, non-natural U, and/or transuranic isotopes (Pu, Am, or Cm), which can be used as nuclear fuel. The fissionable isotope content in the core can be uniform or variable according to design requirements. The content of ²³⁵U can range from natural uranium up to the 95% enrichment level in ²³⁵U.

In both core configurations of the microreactor (10), empty spaces are provided (*gas plenum*) inside the fuel encapsulation (lining or *cladding*) to accommodate gaseous fission products, swelling (*fuel swelling*) generated during the operation of the microreactor, as well as liquid metal, to ensure better heat conduction.

Nuclear Cells (1) can generate thermal power (heat), preferably between 80 kW and 240 kW, equivalent to electrical power ranging from 32 kW to 96 kW, considering a thermal efficiency of 40%. In the different preferred embodiments, the dimensions of the microreactor core (10) are (thickness x length x height) (25 cm x 40 cm x 40 cm), (25 x cm x 40 cm x 60 cm), or even (25 cm x 80 cm x 60 cm) that can safely generate 80 kW, 120 kW, or 240 kW of thermal power, respectively. The level of thermal and/or electrical power of the Nuclear Cell (1) varies depending on the size of the core of the microreactor (10) and may be lower or higher according to demand.

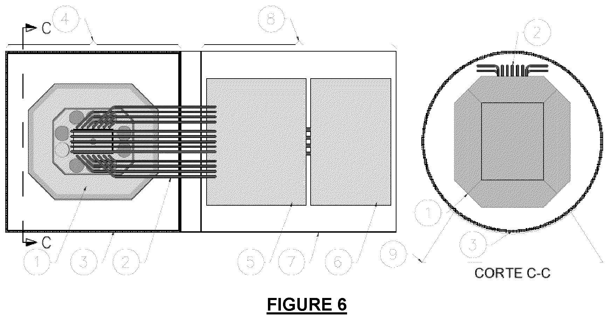

The thermal or electrical power of the Nuclear Battery, which contains a plurality of Nuclear Cells (1), depends on the number of Nuclear Cells (1) of the implementation. Figures 1, 6 and 7 illustrate different alternatives for implementing the Nuclear Battery, showing possible arrangements of Nuclear Cells (1) of 80 kW, 120 kW or 240 kW of thermal power. Figure 6 shows the minimum implementation of a Nuclear Battery with just 1 Nuclear Cell (1) within Block A (4).

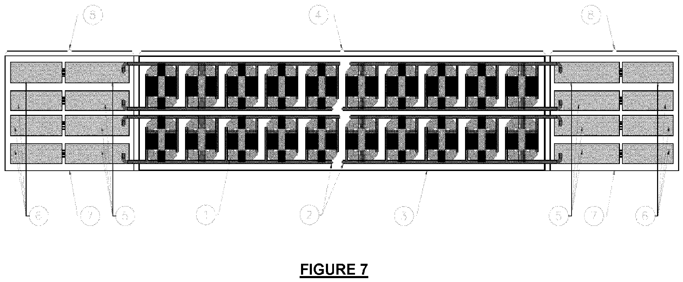

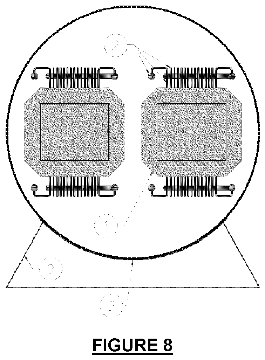

Figure 7 shows a Nuclear Battery with 20 Cells (1), inside Block A (4), but with a different configuration to that presented in figure 1. In figure 7, Block A (4) is positioned in the central part, and two Blocks B (8) are positioned to the right and left of Block A (4). Figure 8 presents a vertical section of the configuration of 2 Nuclear Cells (1) within Block A (4) in vertical section with different routing of the heat transfer module tubes (2). In figure 7, the heat transfer module (2) transfers the thermal power generated by the 10 Nuclear Cells (1) located on the left to the power generation module located on the left, and transfers the power generated by the 10 Nuclear Cells (1) located on the right to the power generation module located on the right. There are other possible configurations of Nuclear Cells (1) with 1, 2, 3, or 4 Nuclear Cells (1) within Block A (4) in the vertical section. Thus, the diameter and length of the Nuclear Battery can vary according to the need for the same power capacity.

### Implementation of a Nuclear Battery with an electrical power of 32 kW.

The simplest embodiment, in which the Nuclear Battery houses only one Nuclear Cell module (1), is illustrated in figure 6. To describe the Nuclear Cell (1) of this first embodiment, an electrical power of 32 kW is considered, a value within the current characteristic range of electrical microgeneration in Brazil. The Nuclear Cell (1) has a microreactor (10) core with nuclear fuel from a UMo alloy, with an enrichment of less than 20% (HALEU), and with a neutron reflector (14) of BeO. For these parameters, a parallelepiped-shaped reactor core (slab) with dimensions of approximately 25 cm x 40 cm x 40 cm can safely generate 80 kW of thermal power. The reactor comprises a reflector thick enough to reflect neutrons back to the core to achieve criticality and small reactivity excess to operate it over its 15-year life. Reactivity control is performed through rotating control drums (15) with absorber plates (12) of B₄C, located in the reflector region (14). The microreactor (10) comprises containment, including radiation shielding and thermal insulation as shown in figures 2 and 3, and the Nuclear Cell (1) has a volume of less than 2 m³.

In this embodiment, the heat transfer module (2) is based on a plurality of *heat pipes* (tubes de calor) in which their hot (vaporization) ends are embedded in sealed penetrations in the reflector region (14) close to the microreactor core (10). The tubes pass through the reflector (14) and all the shielding and containment components of the Nuclear Cell (1) and are routed through Block A (4) to its interface with the Block B (8). This same module is used to remove residual heat in case of shutdown of the Nuclear Cell (1). In the preferred implementation, the residual heat is dissipated by natural convection through environmental air via fins. In preferred implementations, the Nuclear Cell modules (1) are all passive, substantially increasing the safety of the Nuclear Battery. In these implementations, remote operation of the Nuclear Battery is also sought, with only the monitoring of some operating parameters and the emergency shutdown remaining on the local panel.

Through sealed penetrations between these 2 blocks (4, 8), the tubes penetrate Block B (8), and their cold (condensing) ends are connected to the hot part of some Stirling engines. A Stirling engine can have one or several heat pipes, depending on its capacity. The cold source for heat rejection is atmospheric air flowing naturally or forcedly into a fin arrangement. Considering a thermal efficiency for this power generation arrangement of around 40%, the electrical power output of this Nuclear Battery implementation is 32 kW.

The Nuclear Cell (1), as shown in figure 6, is positioned within Block A (4), in a metallic structure sized to support it, and ensure the safe and correct functioning of the Nuclear Battery.

### Implementation of Nuclear Batteries from a plurality of Nuclear Cells (around 1 electrical MW)

Various implementations of Nuclear Batteries with a plurality of Nuclear Cells (1) can be configured to generate powers of 1 electrical MW:
a) Power of 960 electrical kW, or 0.96 electrical MW: The arrangements in figures 1 and 7 containing 20 Nuclear Cells (1) with 120 kW thermal power and thermal efficiency of 40%, have a total thermal power generation capacity of 2400 kW and a total electrical power generation of 960 kW;
b) Power of 960 electrical kW, or 0.96 electrical MW: The arrangements in figures 1 or 7 containing 30 Nuclear Cells (1) of 80 kW thermal power and thermal efficiency of 40%, have a total thermal power generation capacity of 2400 kW and a total electrical power generation of 960 kW, or 0.96 electrical MW.

The preferred conversion module for thermal energy into useful work (5) for these implementations is a plurality of Stirling machines, and the heat transfer module (2) of the microreactors for them would be heat pipe technology. The cold source for heat rejection can be performed using atmospheric air or water flowing naturally or forced into a fin arrangement.

### Implementation of Nuclear Batteries from a plurality of Nuclear Cells (around 2 MW)

A Nuclear Battery with a power of around 2 MW can be implemented by adopting the configuration shown in figure 7, modified to contain 22 Nuclear Cells (1) of 240 kW of thermal power, in 2 rows totaling 22 units. Also considering a power conversion module (5) with thermal efficiency of 40%, the Nuclear Battery would have an electrical power of 2.11 MW. Given the greater power generation capacity, the preferred implementation for the conversion module for thermal energy into useful work (5) and electricity would be a Brayton cycle. In this condition, the refrigerant circulation to remove nuclear heat would forcefully occur. The microreactor cooling pipe would penetrate the Nuclear Cell (1) from below and exit from above as shown in figure 8. The piping bundle would be routed to Block B (8) to the conversion module for thermal energy into useful work (5). In this case, given the generation scale, a single gas turbine is preferably used.

Another possibility would be the configuration from figure 8 with 4 rows of 11 Nuclear Cells (1) totaling 44 units with thermal power of 120 kW. Considering a thermal efficiency of 40%, the total generation capacity is 2.11 MW of electrical power.

The cold source for heat rejection can be performed using atmospheric air or water flowing naturally or forced into a fin arrangement.

### Generation of greater capacity in sites with a plurality of Nuclear Batteries (supply between 2 and 10 MW)

Higher power needs can be met using two or more Nuclear Batteries at the same site. This option is preferable to increasing the size of Nuclear Batteries as it is easier to serially manufacture similar and smaller units. For example, to meet an electrical power demand close to 2 MW of electrical power, it is possible to supply a set of 2 960 kW Nuclear Batteries totaling 1920 kW or 1.92 MW of electrical power.

To meet an electrical power demand above 5 MW of electrical power in a site or microgrid, it is possible to supply a set of 6 Nuclear Batteries of 960 kW totaling 5.76 MW of electrical power or 3 Nuclear Batteries of 2.11 MW totaling 6.33 MW of electrical power.

To meet an electrical power demand of 10 MW of electrical power in a site or microgrid, it is possible to supply a set of 5 Nuclear Batteries of 2.11 MW totaling 10.55 MW of electrical power.

### Implementation of Nuclear Batteries that provide electrical power and heat

Another implementation considers a dual use of the Nuclear Battery, in which an application requires electrical energy and heat generation for industrial use or other purposes. In this implementation, the Nuclear Battery can comprise a single module or a plurality of Nuclear Cell modules (1), as described in the previous implementations. To generate thermal power (heat), heat recovery modules are installed in Block B (8) or, as necessary, some of the Nuclear Cells (1) are dedicated to modules for the utilization of thermal energy, directing their heat transfer tubes to these modules.

The present invention has been disclosed in this specification in terms of its preferred embodiment. However, other modifications and variations are possible from the present description and are still within the scope of the invention disclosed herein.

## Claims

1. Modular Nuclear Battery System, **CHARACTERIZED in that** it comprises at least one Nuclear Cell (1), subdivided into two Blocks A (4) and Block B (8), and support structures (9), wherein:
- Block A (4) houses at least one Nuclear Cell (1), heat transfer modules (2), structural and sealed containment (3), Nuclear Cell fixing modules (1), and nuclear instrumentation and other required sensors for control and monitoring of Nuclear Cells (1) and the Nuclear Battery;
- Block B (8) houses the power generation module, which comprises the conversion modules for thermal energy into useful work (5), electricity generation module (6), simple containment (7), and structures required to control and monitor the Nuclear Battery;
whereby the fission heat generated in the Nuclear Cell (1) in Block A (4) is transferred by conduction through the microreactor core (10) to a plurality of tubes (13) of the heat transfer modules (2), these heat transfer modules (2) pass through the reflector (14) and all the containment components of the Nuclear Cell (1) and connect directly to the power generation module located in Block B (8).

2. System according to claim 1, **CHARACTERIZED in that** the heat transfer module (2) is based on forced circulation technologies, with liquid refrigerants (liquid metal such as Na, K, Li, or mixtures thereof) or gas (He, CO₂ or air), or passive technologies such as *heat pipes* (tubes de calor) with liquid metal working fluid (Na, K, Li, or mixtures of these), and the power generation module contains modules that can be based on Rankine, Brayton, Stirling, or other thermal cycles to generate useful work.

3. System, according to claim 1, **CHARACTERIZED in that** in Block A (4), the nuclear instrumentation comprises neutron and gamma radiation sensors and the other sensors are temperature, humidity, pressure, fire, and geographic positioning GPS sensors; and in Block B (8), the structures required to control and monitor the Nuclear Battery are a control panel with display and alarms for high temperature, high radiation, neutron flux, reactivity, position of the reactivity drums, position of control bars, fire, external power demand information and GPS.

4. System, according to claim 1, **CHARACTERIZED in that** the structural and sealed containment (3) is made of steel sized to resist impacts and the simple containment (7) is made of thin steel.

5. System, according to any one of claims 1 to 4, **CHARACTERIZED in that** it comprises a plurality of Nuclear Cells (1) arranged in various arrangements, wherein the thermal and electrical powers are proportional to the number of Nuclear Cells.

6. System, according to any one of claims 1 to 5, **CHARACTERIZED in that** heat recovery modules are installed in Block B (8) or some of the Nuclear Cells (1) are dedicated to thermal energy utilization modules by routing their heat transfer tubes to these modules for thermal power generation.

7. Nuclear cell (1) **CHARACTERIZED in that** comprises a microreactor (10) and a layered containment and shielding arrangement integrated with a plurality of protective layers, with sealed penetrations for the reactivity control bar (12) and reactivity control rotating drums (15) arranged in the center of the microreactor core (10) and in the reflector region, sealed penetrations for piping (13) of the heat transfer module (2) of the microreactor core (10); neutron reflector (14) and reactivity control set composed of two parts: rotating drums (15) and neutron absorber bar (12) .

8. Nuclear Cell (1), according to claim 7, **CHARACTERIZED in that** the microreactor (10) can comprise cylindrical, almost cylindrical, cubic, spherical, or parallelepiped (slab) geometry.

9. Nuclear cell (1), according to claim 7 or 8, **CHARACTERIZED in that** the core of the microreactor (10) comprises a solid monolithic block containing combustible material in its interior, such as metallic uranium or different uranium alloys, such as UMo, or UZr or ceramics such as uranium oxide (UO₂), or uranium carbide (UC), enclosed in a first containment barrier (11), comprising in the center a sealed penetration for positioning a neutron absorber bar (12).

10. Nuclear Cell (1), according to claims 7 or 9, **CHARACTERIZED in that** the core of the microreactor (10) is composed of a set of fuel elements with the core containing a fuel element (22) with a metallic lining (21), comprising different enrichments (23), (24) and (25) juxtaposed to form a compact block.

11. Nuclear cell (1), according to claim 10, **CHARACTERIZED in that** two fuel elements, in the center, are replaced by a device for positioning a reactor control and/or safety bar (26).

12. Nuclear cell (1), according to claim 10 or 11, **CHARACTERIZED in that** the fuel plates may be of metallic uranium, different uranium alloys, uranium oxide or carbide, dispersions, mixture of uranium and transuranics, mixture of Th, ²³⁵U and transuranics or other different forms of chemical compounds or metal alloys.

13. Nuclear cell (1), according to any one of claims 7 to 10, **CHARACTERIZED in that** empty spaces (*gas plenum*) are anticipated inside the fuel encapsulation (lining or *cladding*) to accommodate gaseous fission products, swelling (*fuel swelling*) generated during the operation of the microreactor (10), as well as liquid metal to ensure better heat conduction.

14. Nuclear Cell (1), according to any one of claims 7 to 13, **CHARACTERIZED in that** each Nuclear Cell (1) comprises its own shielding and containment arrangement, independently, wherein the arrangement comprises at least 3 metallic barriers between the reactor core and the environment, wherein the first containment barrier (11) comprises a sealed metallic lining of stainless steel or Zr alloys, followed by a layer of neutron reflecting material (14), preferably BeO, and a neutron shield in the form of a neutron absorption plate (16), preferably from B₄C; the second containment barrier (17) comprises a sealed metal lining of stainless steel, which encloses the entire neutron reflector and shielding region and also all penetrations in the neutron reflector (14) to the neutron absorber bar (12), rotating drums (15), and piping (13) of heat transfer modules (2), followed by gamma radiation shielding (18) of stainless steel, tungsten, lead, concrete, or a combination of plates of these materials, and thermal insulation (19) which can be ceramic material such as Al₂O₃; and the third containment barrier (20) comprises a sealed metallic lining of stainless steel and encloses all penetrations in the region of the radiation shield.

15. Nuclear Cell (1), according to any one of claims 7 to 14, **CHARACTERIZED in that** sealed penetrations can be partial or total, and that for a Nuclear Battery with electrical power up to 1.5 MW, the preferred technology for the heat transfer module (2) of the microreactor core (10) is *heat pipes* with partial penetrations, and for a Nuclear Battery with electrical power above 1.5 MW, the preferred technology for the heat transfer module (2) of the core is the forced circulation of refrigerant in the form of gas or liquid with total penetrations.

16. Nuclear Cell (1), according to claim 15, **CHARACTERIZED in that** partial penetrations can be made on the upper or lower faces of the Nuclear Cell (1) or on both faces.

17. Nuclear Cell (1), according to claims 15 or 16, **CHARACTERIZED in that** the sealed penetrations of the neutron absorber bar (12), rotating drums (15), and piping (13) of the heat transfer modules (2) pass through sealed shields and containments until reaching the external surface (20) of the Nuclear Cell (1).

18. Nuclear cell (1), according to any one of claims 7 to 17, **CHARACTERIZED in that** the neutron reflector (14) is preferably constructed of beryllium oxide, metallic beryllium, alumina, or graphite; the neutron absorber bar (12) is made of B₄C; the rotating drums (15) contain neutron absorber plates (15A) made of B₄C and reflector material (15B) of beryllium oxide, metallic beryllium, alumina, or graphite.
